# DEMANDE DE BREVET EUROPEEN

(11) **EP 1 739 458 A1**
(43) Date de publication de la demande: **03.01.2007**
(21) Numéro de dépôt: 06300709.0
(22) Date de dépôt: 21.06.2006
(51) Int. Cl.: G01T 1/24, G01T 1/29

(54) **Dispositif de détection de rayonnements à électrodes empilées et méthode de détection de rayonnements ionisants mettant en oeuvre un tel dispositif**

(30) Priorité: 01.07.2005 FR 0552014
(71) Demandeur: COMMISSARIAT A L'ENERGIE ATOMIQUE, 75752 Paris Cédex 15 (FR)
(72) Inventeur: Gros d'Aillon, Eric, 38320, BRIE ET ANGONNES (FR); Verger, Loïck, 38000, GRENOBLE (FR); Montemont, M. Guillaume, 38000, GRENOBLE (FR)
(74) Mandataire: Palix, Stéphane

(57) **Abrégé**

Ce dispositif de détection de rayonnements ionisants comprend un empilement intégrant un premier ensemble d'électrodes (310), un élément sensible (320) susceptible d'interagir avec le rayonnement incident à détecter par libération de paires de charges mobiles électrons - trous, et un second ensemble (330) d'électrodes (331), lesdits premier et second ensembles étant destinés à collecter les charges mobiles ainsi libérées.

Cet empilement comporte en outre un troisième ensemble (350) d'électrodes (351) destinées à mesurer les charges induites par le mouvement desdites charges mobiles, les électrodes (351) dudit troisième ensemble (350) étant séparées de celles constitutives dudit second ensemble (330) par une couche (340) réalisée en un matériau électriquement isolant, définie de manière à permettre la réalisation d'une liaison capacitive entre les électrodes (331) dudit second ensemble (330) et les électrodes (351) dudit troisième ensemble (350).

## Description

### DOMAINE TECHNIQUE

La présente invention concerne un dispositif de détection de rayonnements ionisants de particules ou d'ondes électromagnétiques. Un tel dispositif est communément mis en oeuvre, tout d'abord, dans un but premier de détection de ce type d'ondes ou de particules, à des fins notamment scientifiques, et ensuite pour former des images de certaines parties d'un objet à partir des rayons transmis à travers ou diffractés ou réfléchis par cet objet après irradiation, dans le but par exemple d'analyser la composition chimique de cet objet.

### ETAT ANTERIEUR DE LA TECHNIQUE

Pour former des images, il est connu, notamment dans le domaine de l'imagerie par rayonnement X ou gamma, d'employer un dispositif de détection parallélépipédique à deux directions principales, en général de type matriciel. Les deux directions principales définissent classiquement un plan de détection, dans lequel le détecteur permet la localisation du lieu d'interaction du rayonnement incident avec le détecteur. Il est en outre connu d'employer de tels détecteurs pour former des images numériques, c'est-à-dire codées en une séquence de bits informatiques.

Un tel détecteur comprend généralement un élément interagissant avec un rayonnement incident par libération de charges électriques mobiles, et des électrodes dans lesquelles les charges ainsi libérées induisent des charges mobiles. Parmi ces électrodes, il y a en général une cathode unitaire formant un ensemble équipotentiel sur le plan de détection, tandis que les anodes sont constituées d'une pluralité de points ou pixels juxtaposés formant une matrice dans le plan de détection.

Pour augmenter la compacité des voies anodiques et cathodique de mesures, les points anodiques sont groupés en sous-ensembles électriquement reliés de manière à définir des lignes équipotentielles et des colonnes équipotentielles selon les deux directions principales du plan de détection. Pour cela, les anodes ponctuelles comportent en fait deux zones élémentaires voisines électriquement isolées l'une de l'autre et susceptibles d'être reliées l'une à une ligne, l'autre à une colonne d'électrodes et, partant, d'être portées à deux potentiels différents.

La construction d'un tel détecteur comprend un empilement de trois couches fonctionnelles différentes : la couche cathodique, l'élément sensible de détection, puis une couche d'anodes ponctuelles.

Pour mesurer les caractéristiques des charges induites dans les électrodes, il est nécessaire de prévoir une voie par groupe d'électrodes à potentiel donné. Ainsi, il ne faut qu'une voie cathodique pour le détecteur, mais autant de voies de mesure qu'il y a d'anodes et d'électrodes non collectrices différentes. Au niveau des anodes et des électrodes non collectrices, les lignes, d'une part, et les colonnes, d'autre part, sont polarisées à des potentiels différents pour les distinguer mutuellement lors de la collection de charges induites.

Comme l'élément sensible et les sous-ensembles d'électrodes sont polarisés, les électrons qui sont libérés lors de l'interaction se déplacent et sont collectés par une ligne anodique, tandis que leurs déplacements induisent des flux de charges dans la colonne proche. Ainsi, la voie cathodique et les voies d'électrodes non collectrices les plus proches du lieu d'interaction sont parcourues par des charges induites par les charges libérées lors de l'interaction.

On entend par « non collectrice » une électrode qui ne collecte pas directement les charges libérées par l'interaction d'un rayonnement avec l'élément sensible. En fait, les électrodes collectrices sont en contact électrique avec l'élément sensible. Les électrodes dites « non collectrices » collectent tout de même les charges induites.

Pour un rayonnement donné, la ligne et la colonne qui collectent des charges semblent donc « se croiser » au niveau du lieu d'interaction. En réalité, cette ligne et cette colonne ne se touchent pas, mais sont reliées à deux zones élémentaires voisines, portées à deux potentiels distincts, comme indiqué précédemment.

La cathode sert à détecter l'énergie du rayonnement incident, tandis que les anodes, plus sensibles que la cathode, permettent de localiser la position du lieu d'incidence du rayon dans le plan de détection. Cette construction permet de localiser le lieu d'interaction du rayonnement incident dans le plan de détection.

De plus, la mesure de certains paramètres caractérisant les charges collectées par la cathode permet d'évaluer la profondeur de ce lieu d'interaction. Ces paramètres comprennent par exemple l'énergie ou la durée séparant le signal anodique du signal cathodique.

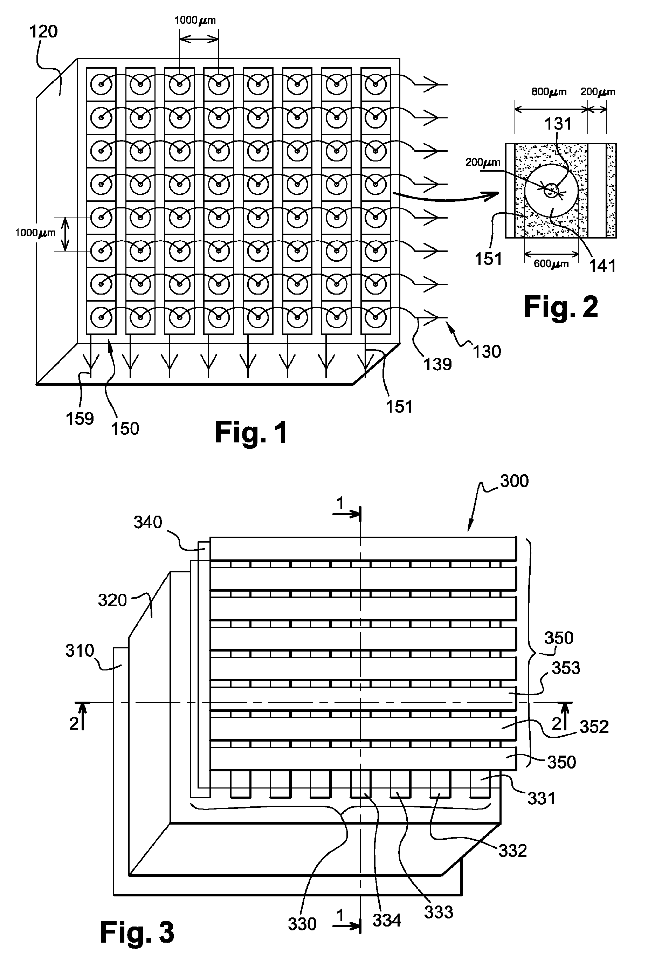

Comme le montrent les figures 1 et 2, les deux zones d'électrodes élémentaires peuvent par exemple être formées par un disque central **131** et une couronne périphérique **151,** portés respectivement au potentiel d'une ligne **130** et au potentiel d'une colonne **150.** Pour tenir cette différence de potentiel entre le disque et la couronne, un matériau électriquement isolant forme un interstice **141** entre eux. Cet interstice isolant est tel que la circulation des charges collectées au niveau d'un disque **131** induit des charges sur l'électrode voisine **151,** générant ainsi un signal sur chacune des voies de lecture **139, 159** indiquant ainsi la localisation en abscisse et en ordonnée du lieu d'interaction.

Cependant, de tels dispositifs de détection de l'art antérieur présentent des inconvénients, car ils sont limités en termes de précision de mesure énergétique des rayonnements détectables.

En effet, lorsque la différence de potentiel entre deux zones d'électrodes élémentaires voisines, c'est-à-dire entre une ligne et une colonne données, est trop faible, les charges libérées risquent de ne pas être collectées correctement au niveau des zones élémentaires. Cette absence de collecte de charges laisse ainsi apparaître des « zones mortes » sans signal, ce qui entraîne une diminution du rapport signal sur bruit, donc une dégradation de la qualité de l'image réalisée.

Inversement, lorsque la différence de potentiel entre une ligne et une colonne données est trop élevée, les charges libérées risquent d'être collectées sur la colonne, normalement non collectrice, au lieu de l'être par la ligne concernée. Dans ce cas, des informations sont perdues, ce qui entraîne également une diminution du rapport signal sur bruit, donc une dégradation de la qualité de l'image réalisée.

Avec ce type de détecteur de l'art antérieur, il est donc nécessaire de sélectionner convenablement la différence de potentiel entre lignes et colonnes. Cependant, il n'existe pas de bon compromis, car quelle que soit la différence de potentiel appliquée, des charges sont perdues sur les anodes collectantes, ce qui entraîne une perte de précision de la mesure.

Par ailleurs, les dispositifs de détection de l'art antérieur tels que précédemment décrits limitent, par construction, la compacité des détecteurs, alors que l'on cherche aujourd'hui à les miniaturiser davantage. En effet, pour définir les lignes et les colonnes, il est nécessaire, comme précédemment évoqué, de prévoir deux zones d'électrodes élémentaires voisines dans le même plan pour chaque pixel, avec un espace isolant entre chacune de ces deux zones.

### EXPOSE DE L'INVENTION

L'objet de la présente invention est donc de proposer un dispositif de détection de rayonnements dont la structure permet de former facilement des images avec un rapport signal sur bruit et une résolution meilleurs que ceux des détecteurs de l'art antérieur, tout en permettant d'augmenter la compacité du détecteur.

L'invention porte donc sur un dispositif de détection de rayonnements ionisants présentant un empilement comprenant un premier ensemble d'électrodes, un élément sensible interagissant avec un rayonnement incident par libération de paires de charges mobiles électrons - trous et un second ensemble d'électrodes, lesdits premier et second ensembles étant destinés à collecter les charges mobiles ainsi libérées.

Selon l'invention, cet empilement comporte en outre un troisième ensemble d'électrodes destinées à mesurer les charges induites par le mouvement des charges mobiles générées par l'interaction du rayonnement incident avec l'élément sensible, les électrodes dudit troisième ensemble étant séparées de celles constitutives dudit second ensemble par sur une couche électriquement isolante, définie de manière à permettre une liaison capacitive entre les électrodes dudit second ensemble et les électrodes dudit troisième ensemble.

Autrement dit, le détecteur objet de la présente invention comporte cinq couches empilées. De par cette construction, les zones élémentaires de deux sous-ensembles d'électrodes distincts, collecteur et non collecteur, ne sont plus juxtaposées dans le même plan, mais décalées de manière sensiblement perpendiculaire par rapport au plan de détection. Elles sont de plus séparées les unes des autres par une couche isolante électriquement et donc reliées par liaison capacitive.

Par conséquent, les électrons ne peuvent pas être collectés par l'électrode non collectrice. De plus, la miniaturisation des électrodes élémentaires peut être augmentée par rapport à l'art antérieur, puisqu'il n'est plus nécessaire de prévoir deux zones voisines à deux potentiels différents dans le même plan.

En pratique, le premier ensemble peut être formé d'une seule électrode ou de plusieurs électrodes. Autrement dit, la cathode peut être segmentée ou non. La segmentation de la cathode permet de diminuer sensiblement le nombre de voies anodiques de lectures nécessaires, donc d'augmenter la compacité du détecteur. Corollairement, le second ensemble est formé de plusieurs électrodes.

Selon une forme avantageuse de réalisation de l'invention, les électrodes du second ensemble sont électriquement reliées entre elles de manière à former des lignes sensiblement parallèles entre elles. De manière analogue, les électrodes du troisième ensemble sont électriquement reliées entre elles de manière à former des colonnes sensiblement parallèles entre elles, et s'étendant transversalement par rapport auxdites lignes.

Autrement dit, une couche d'anodes collectrices est constituée de lignes juxtaposées et une couche d'électrodes non collectrices est constituée de colonnes, transversales à ces lignes. Cette construction permet l'augmentation de la compacité du détecteur et une interpolation aisée du lieu d'interaction dans le plan.

De manière avantageuse, les lignes sont orthogonales aux colonnes. Cela permet de minimiser la quantité de matière nécessaire à la réalisation de ces lignes et colonnes.

Selon une forme avantageuse de réalisation de l'invention, la couche électriquement isolante et le troisième ensemble sont percés d'orifices de façon à loger des moyens de contacts électriques avec chacune des électrodes élémentaires constitutives du second ensemble.

Ainsi, on peut aisément maîtriser les liaisons capacitives définies par la couche isolante **640** entre les électrodes collectrices **630** et les électrodes non collectrices **650.**

Selon une autre forme de réalisation de l'invention, les électrodes élémentaires du troisième ensemble peuvent être électriquement connectées entre elles de manière à former des sous-ensembles électriquement contigus et isolés les uns des autres. Dans cette configuration, chacun des sous-ensembles peut être relié au même nombre d'électrodes élémentaires du second ensemble ainsi qu'à une voie de mesure. De plus, les électrodes élémentaires du second ensemble peuvent être reliées entre elles de façon discrète et sont interconnectées électriquement de façon à constituer une pluralité de sous-ensembles collecteurs, chacun de ces sous-ensembles collecteurs étant électriquement relié à une voie de mesure. Et deux électrodes élémentaires appartenant à un même sous-ensemble collecteur sont chacune positionnées en regard de deux sous-ensembles non collecteurs distincts définissant ainsi deux liaisons capacitives.

En d'autres termes, les électrodes du troisième ensemble peuvent être électriquement reliées entre elles de manière à former des rectangles portés chacun au potentiel d'une voie de mesure. De plus, chacun de ces rectangles peut être situé en regard d'un nombre déterminé d'électrodes du second ensemble, définissant avec celles-ci autant de liaisons capacitives. Les électrodes élémentaires du second ensemble peuvent quant à elles former des séquences discrètes équipotentielles et chacune reliée à une voie de mesure. Cette construction permet d'atteindre une bonne compacité relativement aux détecteurs de l'art antérieur.

En pratique, l'élément sensible est constitué par un tellure de cadmium, et notamment du CdTe ou du CdZnTe. Ce matériau présente, de manière connue, une bonne sensibilité aux rayonnements à détecter. Il peut également être réalisé en un matériau choisi dans le groupe comprenant : HgI₂, AsGa et Se.

La présente invention a également pour objet une méthode de détection de rayonnements ionisants à l'aide d'un dispositif de détection tel qu'exposé ci-dessus.
Selon l'invention, cette méthode consiste :
- à effectuer les mesures d'amplitude des signaux recueillis sur les voies de mesure des premier et/ou second et/ou troisième ensembles d'électrodes ;
- à inférer des mesures des signaux recueillis sur les voies de mesure des premier et second ensembles d'électrodes l'énergie du rayonnement incident ;
- à inférer des mesures des signaux recueillis sur les voies de mesure des second et troisième ensembles d'électrodes la localisation du lieu d'interaction dans un plan parallèle à la surface des électrodes ;
- à évaluer la profondeur du lieu d'interaction à partir des signaux recueillis sur les voies de mesure du premier ensemble d'électrodes, ou du premier et du second ensembles d'électrodes, ou du troisième ensemble d'électrodes.

Avantageusement, ladite méthode consiste également :
- à évaluer les paramètres dynamiques caractéristiques du déplacement et de la quantité de charges parcourant les électrodes desdits second et troisième ensembles,
- à inférer de ces évaluations la profondeur du lieu d'interaction dans ledit élément et la position dudit lieu dans un plan parallèle à la surface des électrodes.

Concrètement, il s'agit de modes de mesures conventionnelles adaptées au dispositif de détection - objet de l'invention. Ces mesures permettent de déterminer l'abscisse et l'ordonnée du lieu d'interaction dans le plan de détection ainsi que sa profondeur dans l'élément.

En pratique, les paramètres dynamiques peuvent comprendre les durées de variation des signaux sur les électrodes desdits premier, second et/ou troisième ensembles, ainsi que la charge maximale et la charge finale induites au niveau des électrodes dudit troisième ensemble. La détermination de ces charges dérive classiquement de la mesure d'une tension au niveau des électrodes en question.

Ces paramètres, pris isolément ou en combinaison, permettent de déterminer l'abscisse et l'ordonnée du lieu d'interaction dans le plan de détection ainsi que sa profondeur dans l'élément.

### BREVE DESCRIPTION DES FIGURES

La manière de réaliser l'invention ainsi que les avantages qui en découlent ressortiront bien de la description des modes de réalisation qui suivent, donnés à titre indicatif et non limitatif à l'appui des figures annexées dans lesquelles :
La figure 1 est une représentation schématique en perspective d'un dispositif de détection selon l'art antérieur.
La figure 2 est une représentation schématique d'un détail de la figure 1.
La figure 3 est une représentation schématique en perspective éclatée d'un dispositif de détection objet de l'invention.
La figure 4 est une représentation schématique en section réalisée selon la ligne 1-1 du dispositif de détection de la figure 3.
La figure 5 est une représentation schématique en section réalisée selon la ligne 2-2 du dispositif de détection de la figure 3.
La figure 6 est une représentation schématique en perspective éclatée d'une forme préférentielle du dispositif de détection de la figure 3.
La figure 7 est une représentation schématique en vue de face du dispositif de détection de la figure 6.
La figure 8 est une représentation schématique en section d'un dispositif de détection conforme à une seconde forme de réalisation de l'invention.

### MODE DE REALISATION DETAILLE

Sur la figure 1 est représenté un dispositif de détection **300** conforme à l'invention. Ce détecteur comprend un empilement d'un premier ensemble d'électrodes **310,** en l'espèce une cathode unitaire, d'un élément sensible **320,** constitué d'une couche de matériau sensible aux rayonnements à détecter, tel qu'un alliage de cadmium, de zinc et de tellure (CdZnTe), ainsi que d'un second ensemble d'électrodes **330** et d'un troisième ensemble d'électrodes **350,** en l'occurrence constitués respectivement de colonnes **331-338** et de ligne d'électrodes **351-358.**

Selon l'invention, les second et troisième ensembles d'électrodes sont séparés par une couche réalisée en un matériau électriquement isolant **340** de façon à définir des liaisons capacitives entre leurs électrodes en regard.

Le matériau composant la couche isolante **340** est typiquement constitué de ZnS, de SiO₂ ou encore en matière plastique, telle que commercialisée sous la marque déposée KAPTON^{®}. Cette couche isolante **340** est choisie de telle sorte que le rapport de la permittivité relative (er) sur l'épaisseur de la couche isolante (1) soit à la fois suffisamment élevé, afin que le signal attendu soit fort, et suffisamment faible pour ne pas générer trop de bruit. Ce rapport va dépendre de la géométrie du détecteur. L'homme du métier est à même de déposer une couche isolante suffisamment fine pour que la permittivité compte peu. Ce choix résulte essentiellement de considérations techniques.
A titre exemplatif, si l'on met en oeuvre un isolant plastique type KLAPTON^{®}, dont la permittivité relative est de 3, l'épaisseur de la couche isolante **340** ne doit pas dépasser 250 µm.

Avec un isolant à plus forte permittivité, voisine de 10 par exemple, l'épaisseur de la couche isolante **340** doit être inférieure à 500 µm.

Avec un isolant à forte permittivité de type oxyde, et voisine de 20, l'épaisseur de ladite couche devra être inférieure à 1 mm.

Cette couche pourrait tout aussi bien être constituée de plusieurs couches superposées de différents matériaux isolants.

Par ailleurs, l'élément sensible **320** présente dans l'exemple décrit une épaisseur de l'ordre de 5 mm.

Lorsqu'un rayonnement interagit avec l'élément sensible **320,** ce dernier est ionisé, c'est-à-dire qu'il libère une ou plusieurs charges (non représentées), en l'occurrence des paires électrons - trous. Ces charges positives et négatives sont mobiles et se déplacent en fonction de la polarisation des ensembles d'électrodes **310** et **330** du détecteur. Les charges positives migrent ainsi vers la cathode **310,** tandis que les charges négatives, constituées par les électrons libérés, migrent vers l'une des colonnes collectrices, en l'occurrence la colonne **334.** Les ensembles d'électrodes sont polarisés de manière connue en soi. Les colonnes **331-338** et les lignes **351-358** sont portées à des potentiels différents.

Ainsi, les électrons sont collectés puis acheminés vers la voie de lecture (non représentée) de la colonne collectrice **334.** On peut alors recueillir ces électrons et procéder par des moyens électroniques adéquats à leur caractérisation (nombre, énergie, durée de propagation des signaux etc.) de manière à pouvoir déterminer précisément l'abscisse du lieu d'interaction du rayonnement.

En conséquence du déplacement d'électrons dans l'élément sensible **320,** des charges sont induites, et sont captées au travers de la liaison capacitive définie par la couche isolante **340,** dans les lignes non collectrices **351-358** du troisième ensemble d'électrodes **350.** On peut alors recueillir ces charges induites et procéder par des moyens électroniques adéquats à leur caractérisation (nombre, énergie, durée de propagation des signaux etc.) de manière à pouvoir déterminer précisément l'ordonnée du lieu d'interaction du rayonnement.

De cette abscisse et de cette ordonnée, on peut alors déduire la localisation du lieu d'interaction du rayonnement dans un plan de détection fictif situé dans l'élément sensible **320.** On peut également, de manière connue en soi, coder les signaux d'abscisse et d'ordonnée sous forme de bits pour reconstituer ensuite une image numérique du rayonnement émis, diffracté, transmis ou réfléchi par un objet que l'on souhaite observer.

Par ailleurs, le déplacement des électrons induit une charge sur la cathode unitaire **310,** ce qui permet, en combinaison avec les signaux des sous-ensembles d'électrodes collectrices et non collectrices, de déterminer la profondeur du lieu d'interaction du rayonnement dans l'élément sensible.

De par la construction du détecteur **300** en couches **310, 320, 330, 340, 350** empilées, les zones élémentaires de deux sous-ensembles d'électrodes distincts, collecteur **330** et non collecteur **350,** ne sont plus juxtaposées dans le même plan, mais décalées l'un par rapport à l'autre selon une direction perpendiculaire au plan de détection. Tandis que les détecteurs de l'art antérieur présentent des zones élémentaires voisines dans un plan de détection (voir figures 1 et 2), les électrodes **330** et **350** sont décalées perpendiculairement au plan de détection dans le détecteur **300.**

Comme décrit ci-dessus, elles sont en outre séparées par une couche isolante **340** et donc reliées par liaison capacitive. Par conséquent, les électrons ne peuvent pas être collectés par l'électrode non collectrice. Donc, le détecteur **300** est apte à collecter davantage de signaux et il présente de ce fait un rapport signal sur bruit, donc une fidélité, supérieure à celle des détecteurs de l'art antérieur pour des dimensions de sous-ensembles d'électrodes identiques.

De même, la miniaturisation des électrodes élémentaires **331-338** peut être augmentée par rapport à celles de l'art antérieur, puisqu'il n'est plus nécessaire de prévoir deux zones voisines à deux potentiels différents dans le même plan. Donc l'interstice qui séparait les zones élémentaires collectrices et non collectrices dans les détecteurs de l'art antérieur, n'est plus situé dans un plan de détection, mais perpendiculairement à ce plan. Partant, il est possible de définir des anodes collectrices élémentaires, ou pixels, plus petites, donc d'améliorer la résolution de détection. Ainsi, le dispositif de détection objet de l'invention permet-il d'obtenir une résolution spatiale inférieure au pas des électrodes.

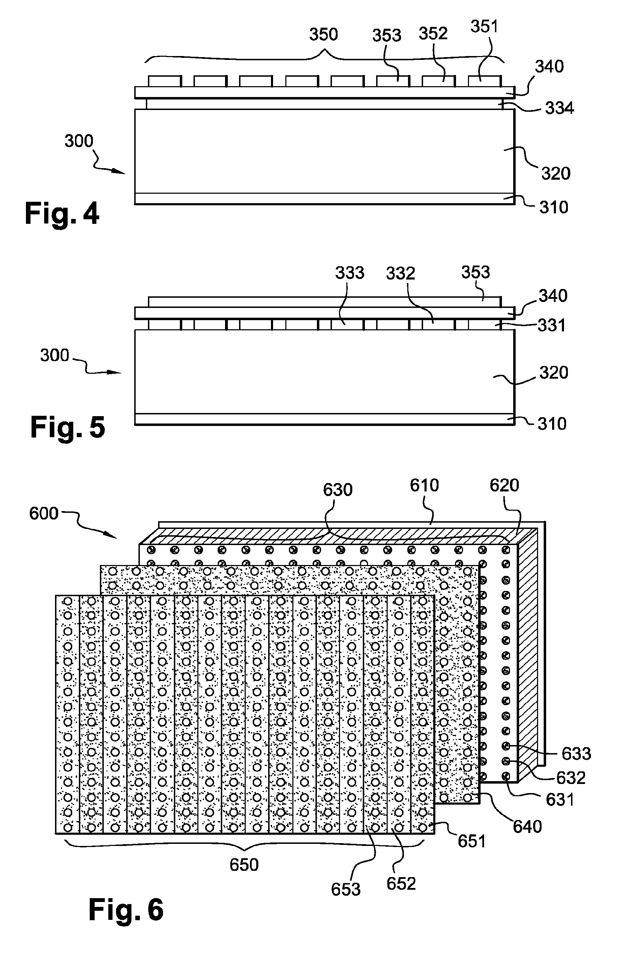

Dans l'exemple de réalisation illustré sur la figure 6, la structure du détecteur de la figure 3 est reproduite à cette différence près que la plaque isolante **640** et les sous-ensembles **651, 652, 653** du troisième ensemble d'électrodes **650** sont percés de manière à laisser passer des moyens de contacts électriques avec les anodes élémentaires du second ensemble **630.** Ces moyens de contacts se présentent sous forme de picots ou d'ergots **631, 632, 633...**

Cette structure particulière des contacts entre les anodes élémentaires collectrices **631, 632, 633** et leurs voies de lectures (non représentées) permet de bien maîtriser la liaison capacitive définie par la couche isolante **640** entre les électrodes collectrices **630** et les électrodes non collectrices **650.** En effet, le bruit capacitif et le bruit dû au courant de fuite peuvent être réduits par rapport à la forme de réalisation exposée en relation avec la figure 3, car les électrodes non collectrices sont moins « masquées » ou isolées par la couche d'anodes.

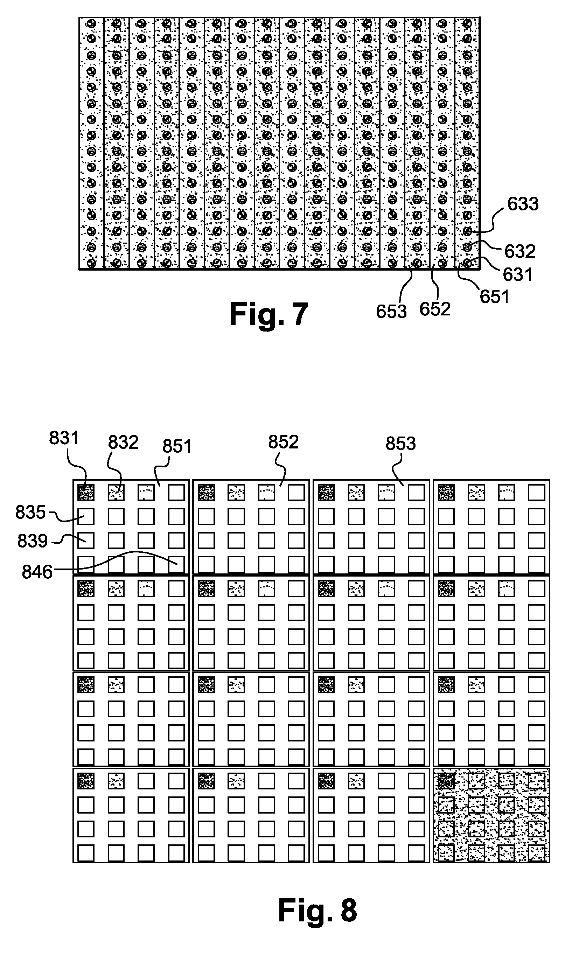

La figure 8 illustre une variante de réalisation du dispositif conforme à l'invention. Dans ce cas, les électrodes du troisième ensemble **850** sont électriquement reliées entre elles de manière à former des sous-ensembles rectangulaires électriquement contigus et isolés les uns des autres **851, 852, 853...** Chaque sous-ensemble est relié par liaison capacitive à seize anodes élémentaires **831-846** du second ensemble d'électrodes. De plus, chacun de ces sous-ensembles non collecteurs est porté au potentiel de la voie de mesure à laquelle il est électriquement relié.

Par ailleurs, les anodes élémentaires du second ensemble peuvent être reliées entre elles et à une voie de mesure de façon discrète. Ces anodes élémentaires sont en outre interconnectées électriquement de façon à constituer une pluralité de sous-ensembles collecteurs, chacun de ces sous-ensembles collecteurs étant électriquement relié à une voie de mesure. Et deux électrodes élémentaires appartenant à un même sous-ensemble collecteur sont chacune positionnées en regard de deux sous-ensembles non collecteurs distincts, définissant ainsi deux liaisons capacitives. Cette construction permet d'atteindre une bonne compacité relativement aux détecteurs de l'art antérieur.

Bien évidemment, d'autres schémas de connexions peuvent être envisagés sans pour autant sortir du cadre de la présente invention. De même, d'autres matériaux ou d'autres dimensions peuvent être adoptés pour composer le dispositif de détection qui peut être utilisé pour tout type de rayonnement ionisant, comme les rayons X, les rayons gamma, les particules alpha, les neutrons...

Par ailleurs, chacun de ces dispositifs de détection implique la mise en oeuvre de méthodes de détection de rayonnements ionisants. Ces méthodes comprennent des étapes de lecture des signaux délivrés par le détecteur.

Ces étapes consistent notamment à effectuer la mesure de l'amplitude des signaux recueillis sur les premier et/ou second ensembles d'électrodes. L'amplitude des signaux correspond à la quantité de charges induites. De cette mesure, on infère l'énergie du rayonnement incident.

Ensuite, il faut localiser le lieu d'interaction dans un plan parallèle à la surface des électrodes. Cela est réalisé grâce aux mesures de l'amplitude des signaux recueillis sur les anodes et sur les électrodes non collectrices. Ainsi, le lieu d'interaction se situe à l'intersection des sous-ensembles parcourus par des charges libérées ou induites par l'interaction.

Enfin, grâce aux signaux respectivement S1 (signaux du premier ensemble d'électrodes), ou S1 et S2 (signaux du second ensemble d'électrodes), ou encore S3 (signaux du troisième ensemble d'électrodes), on peut inférer la profondeur du lieu d'interaction dans ledit élément.

De manière à améliorer la détermination du lieu d'interaction dans le plan parallèles aux électrodes et en profondeur, on peut également mesure les paramètres dynamiques, notamment la durée de variation des signaux (« temps de montée ») sur les électrodes des premier, second et/ou troisième ensembles (cathode, anodes, électrodes non collectrices). De plus, ces paramètres comprennent le rapport entre les amplitudes mesurées à la cathode (premier ensemble) et à l'anode (deuxième ensemble), ainsi que la charge maximale, la charge finale induite et le courant final au niveau des électrodes non collectrices du troisième ensemble.

Il n'y a pas de difficulté pour l'homme du métier à effectuer ces mesures, ni à choisir les modules électroniques adaptés. Toutes les mesures de charge sont par exemple déduites des mesures des potentiels et des courants au niveau des électrodes.

## Revendications

1. Dispositif de détection de rayonnements ionisants comprenant un empilement intégrant un premier ensemble d'électrodes (310 ; 610), un élément sensible (320 ; 620) susceptible d'interagir avec le rayonnement incident à détecter par libération de paires de charges mobiles électrons ― trous, et un second ensemble (330 ; 630 ; 830) d'électrodes (331 ; 631 ; 831...), lesdits premier et second ensembles étant destinés à collecter les charges mobiles ainsi libérées, ***caractérisé* en ce que** ledit empilement comporte en outre un troisième ensemble (350 ; 650 ; 850) d'électrodes (351 ; 651 ; 851...) destinées à mesurer les charges induites par le mouvement desdites charges mobiles, les électrodes (351 ; 651 ; 851...) dudit troisième ensemble (350 ; 650 ; 850) étant séparées de celles constitutives dudit second ensemble (330, 630, 830) par une couche (340, 640) réalisée en un matériau électriquement isolant, définie de manière à permettre la réalisation d'une liaison capacitive entre les électrodes (331 ; 631 ; 831...) dudit second ensemble (330 ; 630 ; 830) et les électrodes (351 ; 651 ; 851...) dudit troisième ensemble (350 ; 650 ; 850).

2. Dispositif de détection de rayonnements ionisants selon la revendication 1, ***caractérisé* en ce que** le premier ensemble d'électrodes (310 ; 610) est formé d'une électrode unique ou de plusieurs électrodes et **en ce que** le second ensemble (330 ; 630 ; 830) est formé de plusieurs électrodes.

3. Dispositif de détection de rayonnements ionisants selon l'une des revendications 1 ou 2, ***caractérisé* en ce que** les électrodes (331 ; 631 ; 831...) du second ensemble (330 ; 630 ; 830) sont électriquement reliées entre elles de manière à former des lignes sensiblement parallèles entre elles, et **en ce que** les électrodes (351 ; 651 ; 851...) du troisième ensemble (350 ; 650 ; 850) sont électriquement reliées entre elles de manière à former des colonnes sensiblement parallèles entre elles et s'étendant transversalement par rapport auxdites lignes dans le plan de détection.

4. Dispositif de détection de rayonnements ionisants selon la revendication 3, ***caractérisé* en ce que** les lignes sont orthogonales aux colonnes.

5. Dispositif de détection de rayonnements ionisants selon l'une des revendications précédentes, ***caractérisé* en ce que** la couche réalisée en un matériau électriquement isolant (340 ; 640) et le troisième ensemble (350 ; 650, ; 850) sont percés de façon à loger des moyens de contacts électriques avec chacune des électrodes (331 ; 631 ; 831...) du second ensemble (330 ; 630 ; 830).

6. Dispositif de détection de rayonnements ionisants selon l'une des revendications 1 ou 2, ***caractérisé :***
- **en ce que** les électrodes (351 ; 651 ; 851...) du troisième ensemble (350 ; 650 ; 850) sont électriquement connectées entre elles de manière à former des sous-ensembles électriquement contigus et isolés les uns des autres, chacun desdits sous-ensembles étant relié au même nombre d'électrodes (331 ; 631 ; 831...) du second ensemble (330 ; 630 ; 830) ainsi qu'à une voie de mesure,
- **en ce que** les électrodes (331 ; 631 ; 831...) du second ensemble (330 ; 630 ; 830) sont reliées entre elles de façon discrète,
- **en ce que** lesdites électrodes (331 ; 631 ; 831...) dudit second ensemble (330 ; 630 ; 830) sont interconnectées électriquement de façon à constituer une pluralité de sous-ensembles collecteurs, chacun desdits sous-ensembles collecteurs étant électriquement relié à une voie de mesure,
- et **en ce que** deux électrodes appartenant à un même sous-ensemble collecteur sont chacune positionnées en regard de deux sous-ensembles non collecteurs distincts définissant ainsi deux liaisons capacitives.

7. Dispositif de détection de rayonnements ionisants selon l'une des revendications précédentes, ***caractérisé* en ce que** l'élément sensible (320, 620) est réalisé en un matériau choisi dans le groupe comprenant le tellure de cadmium, avec ou sans adjonction de zinc : CdTe ou Cd ZnTe, HgI₂, AsGa et Se.

8. Dispositif de détection de rayonnements ionisants selon l'une des revendications précédentes, ***caractérisé* en ce que** le matériau constitutif de la couche isolante (340 ; 640 ; 840) est choisi dans le groupe comprenant la matière plastique, ZnS et SiO₂.

9. Méthode de détection de rayonnements ionisants mettant en oeuvre un dispositif de détection selon l'une des revendications précédentes, ***caractérisée* en ce qu'**elle comprend les étapes suivantes :
― effectuer la mesure de l'amplitude des signaux recueillis sur lesdits premier et/ou second et/ou troisième ensembles d'électrodes (310 ; 330 ; 350 ; 610 ; 630 ; 650 ; 810 ; 830 ; 850) ;
― inférer des mesures de l'amplitude des signaux recueillis sur lesdits premier et second ensembles d'électrodes l'énergie du rayonnement incident ;
― localiser le lieu d'interaction dans un plan parallèle à la surface des électrodes, à partir de la mesure de l'amplitude des signaux recueillis sur lesdits second et troisième ensembles d'électrodes ;
― à évaluer la profondeur du lieu d'interaction à partir des mesures de l'amplitude des signaux recueillis soit sur le premier ensemble d'électrodes, soit sur le premier et le second ensembles d'électrodes, soit sur le troisième ensemble d'électrodes.

10. Méthode de détection de rayonnements ionisants selon la revendication 9, ***caractérisée* en ce qu'**elle comprend en outre l'étape consistant à mesurer les paramètres dynamiques caractéristiques du déplacement et de la quantité de charges parcourant les électrodes desdits second et troisième ensembles (330, 350 ; 630, 650 ; 830, 850) de manière à en inférer la profondeur du lieu d'interaction dans ledit élément et la position dans le plan parallèle à la surface des électrodes.

11. Méthode de détection de rayonnements ionisants selon la revendication 10, ***caractérisée* en ce que** lesdits paramètres dynamiques comprennent les durées de variation des signaux sur les électrodes desdits premier, second et/ou troisième ensembles (310, 330, 350 ; 610, 630, 650 ; 810, 830, 850), la charge maximale et la charge finale induite au niveau des électrodes dudit troisième ensemble.
